(19) Europäisches Patentamt / European Patent Office / Office européen des brevets

(11) **EP 3 210 835 B1**

(12) **FASCICULE DE BREVET EUROPEEN**

(45) Date de publication et mention
de la délivrance du brevet:
**20.02.2019 Bulletin 2019/08**

(21) Numéro de dépôt: **17157313.2**

(22) Date de dépôt: **22.02.2017**

(51) Int Cl.:
*B60R 16/03* (2006.01)     *F01N 5/04* (2006.01)
*F02B 37/04* (2006.01)     *F02B 37/10* (2006.01)
*F02B 39/10* (2006.01)     *F02M 26/05* (2016.01)
*F02M 26/34* (2016.01)

(54) **PROCEDE DE CONTROLE D'UNE PRODUCTION D'ELECTRICITE SUR UN VEHICULE AUTOMOBILE**

VERFAHREN ZUR KONTROLLE EINER STROMERZEUGUNG IN EINEM KRAFTFAHRZEUG

METHOD FOR MONITORING ELECTRICITY PRODUCTION ON A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2016 FR 1651599**

(43) Date de publication de la demande:
**30.08.2017 Bulletin 2017/35**

(73) Titulaire: **Valeo Systemes de Controle Moteur
95800 Cergy Saint Christophe (FR)**

(72) Inventeurs:
• **COPPIN, Thomas
95000 CERGY (FR)**
• **ANGELOT, Pierre-Julian
78500 SARTROUVILLE (FR)**

(74) Mandataire: **Garcia, Christine
Propriété Intellectuelle
Valeo Systèmes de Contrôle Moteur
14, avenue des Béguines
95800 Cergy St Christophe (FR)**

(56) Documents cités:
**EP-A1- 0 223 419        EP-A2- 0 233 079
EP-B1- 2 379 867        WO-A1-85/04137
WO-A2-2011/088810        FR-A1- 2 986 566
FR-A1- 3 022 946        GB-A- 2 513 432
US-A1- 2006 113 799**

**Description**

La présente invention concerne un procédé de contrôle de la production d'électricité sur un véhicule automobile.

On connait, par exemple par le brevet EP2379867, le principe de recirculer une partie des gaz d'échappement d'un moteur à combustion vers l'admission du moteur. Cette technologie permet sur les moteurs Diesel, de réduire les émissions d'oxyde d'azote. Sur les moteurs à allumage commandé, elle permet de diminuer la consommation de carburant.

On connait également, par exemple par le brevet FR3022946, le principe de récupérer une partie de l'énergie des gaz d'échappement recirculés entre l'échappement et l'admission du moteur, en plaçant un turbo-générateur dans le circuit de recirculation. Les gaz d'échappement recirculés entrainent ainsi en rotation une turbine, qui est couplée mécaniquement à un générateur électrique. L'électricité produite par ce générateur vient s'ajouter à l'énergie électrique produite par la source principale d'électricité du véhicule, qui est généralement un alternateur entrainé par le moteur à combustion.

Le débit de gaz d'échappement recirculés varie en temps réel avec les conditions d'utilisation du moteur, et doit être régulé afin de satisfaire les besoins du moteur thermique. Une fois le débit de consigne assuré, il est souhaitable de récupérer le maximum d'énergie électrique grâce au turbo-générateur. Le but du procédé selon l'invention est d'optimiser la récupération d'énergie électrique en jouant sur la répartition entre les deux sources de production d'électricité.

A cet effet, l'invention propose un procédé de contrôle d'une production d'électricité sur un véhicule automobile, à partir d'un premier et d'un deuxième générateur électrique, agencés pour produire de l'électricité à partir d'une énergie mécanique, comportant les étapes :

-    Estimer une faculté de production électrique associée au premier générateur (étape 51),
-    Estimer une faculté de production électrique associée au deuxième générateur (étape 52),
-    Contrôler la répartition de la puissance électrique produite par chaque générateur en fonction des facultés de production estimées (étape 53),
-    Contrôler la puissance électrique cumulée produite par les deux générateurs (étape 54).

Le procédé permet ainsi de contrôler la production de chacun des générateurs électriques afin d'optimiser la production totale d'électricité.

Selon une caractéristique de l'invention, la faculté de production électrique associée à chacun des générateurs est une puissance électrique que chacun des générateurs peut fournir.

La puissance électrique instantanée susceptible d'être fournie par chacun des générateurs, en fonction des conditions instantanées de fonctionnement, est le principal paramètre utilisé pour réaliser l'optimisation.

Selon une autre caractéristique de l'invention, la faculté de production électrique associée à chacun des générateurs est une énergie électrique que chacun des générateurs peut fournir.

L'énergie électrique susceptible d'être produite au cours d'une phase de fonctionnement peut aussi être utilisée comme critère d'optimisation. En calculant pour une phase de fonctionnement et non selon les conditions instantanées de fonctionnement, l'estimation de la production électrique peut être plus précise. Selon l'invention, un des générateurs électriques est agencé pour être entrainé mécaniquement par un moteur thermique du véhicule.

Ce générateur électrique est le générateur utilisé de manière conventionnelle sur un véhicule.

Selon un mode de réalisation, le générateur électrique est agencé pour être entrainé par le moteur thermique au moyen d'une courroie.

Ce type de générateur électrique est généralement appelé alternateur. Lorsque le générateur peut aussi fonctionner comme moteur électrique, afin d'apporter une assistance de couple au moteur thermique, on parlera d'alterno-démarreur.

Selon un autre exemple de réalisation, le générateur électrique est en prise directe avec le moteur thermique.

Ce type de générateur peut être entrainé par le moteur thermique par engrènement de pignon. Comme précédemment, le générateur peut également être utilisé comme moteur afin d'apporter une assistance électrique de couple au moteur thermique.

Selon un autre mode de réalisation, un des générateurs électriques est agencé pour être entrainé mécaniquement par une roue du véhicule.

Afin de pouvoir être entrainé même lorsque le moteur thermique est stoppé, comme cela peut être le cas avec un véhicule hybride, le générateur électrique peut être entrainé par un organe lié en rotation avec une roue du véhicule. Dans le cas d'un entrainement par une roue motrice, la liaison mécanique peut se faire au niveau de la boite de vitesse du véhicule. L'entrainement peut aussi être réalisé par une roue non motrice. Selon l'invention, un des générateurs électriques est agencé pour être entrainé par des gaz d'échappement du moteur thermique, notamment par l'intermédiaire d'une turbine placée dans l'écoulement des gaz d'échappement et liée en rotation au générateur électrique.

Ce générateur électrique permet de récupérer de l'énergie des gaz d'échappement.

Plus précisément, la turbine entrainant le générateur électrique est disposée dans un circuit de recirculation de gaz d'échappement, de manière à être entrainée par les gaz d'échappement circulant dans ce circuit de recirculation, les gaz d'échappement étant recirculés entre un circuit d'échappement du moteur thermique et un circuit d'admission en gaz comburant du moteur thermique.

La turbine placée sur le circuit de recirculation des gaz d'échappement permet de récupérer de l'énergie lorsque les gaz d'échappement sont recirculés.

La turbine placée sur le circuit de recirculation des gaz d'échappement permet de récupérer de l'énergie des gaz d'échappement recirculés indépendamment du contrôle du moteur thermique. En effet, une turbine placée sur le circuit de recirculation des gaz n'augmentera pas les pertes par pompage du moteur thermique de même qu'elle n'affectera par exemple pas le dosage du carburant, le taux de gaz recirculés internes ou externes, et la dépollution des gaz d'échappement.

Selon une caractéristique de l'invention, les gaz d'échappement sont recirculés entre une portion de circuit d'échappement du moteur située en amont d'une turbine de suralimentation du moteur thermique, et une portion de circuit d'admission du moteur thermique située en aval d'un compresseur de suralimentation, la turbine et le compresseur étant liés en rotation.

On parle ici d'architecture haute pression pour le système de recirculation de gaz d'échappement, dans lequel les gaz d'échappement recirculés sont prélevés au plus près du moteur thermique. On obtient ainsi le meilleur potentiel de récupération d'énergie, puisque les gaz d'échappement sont à une pression et une température supérieure à celle obtenue lorsque les gaz d'échappement sont prélevés en aval de la turbine de suralimentation du moteur thermique.

L'énergie électrique récupérée par turbine placée sur le circuit de recirculation des gaz d'échappement permet de limiter la demande énergétique imposée au moteur à combustion par le générateur entraîné par le moteur thermique ou le générateur entraîné mécaniquement par une roue du véhicule. On pourra donc contrôler la répartition de la puissance électrique produite par chaque générateur, de manière à favoriser la production électrique associée au générateur entraîné par la turbine placée sur le circuit de recirculation des gaz d'échappement par rapport à la production électrique associé aux autres générateurs. On pourra ainsi diminuer la consommation de carburant.

Selon une caractéristique de l'invention, le procédé comporte l'étape :

- Estimer une consommation de carburant du moteur thermique (étape 50),
- Contrôler la puissance électrique produite par chaque générateur pour minimiser la consommation de carburant.

Un premier critère d'optimisation peut être de minimiser la consommation de carburant du véhicule. L'énergie électrique récupérée permet de limiter la demande énergétique imposée au moteur à combustion et ainsi diminuer la consommation de carburant.

On utilisera notamment comme méthode d'optimisation le principe du minimum de Pontryagin. Les variables prises en compte sont la consommation instantanée du moteur et l'état de charge de l'unité de stockage d'énergie.

Selon une autre caractéristique de l'invention, le procédé comporte l'étape :

- Estimer une émission de gaz polluants du moteur thermique,
- Contrôler la puissance électrique produite par chaque générateur pour minimiser les émissions de gaz polluants.

Un autre critère d'optimisation peut être de minimiser les émissions de gaz polluants.

Selon encore une caractéristique de l'invention, le procédé comporte l'étape :

- Estimer les variations instantanées du courant circulant dans un réseau électrique du véhicule, le réseau électrique étant alimenté par les deux générateurs électriques,
- Contrôler la puissance électrique produite par chaque générateur pour limiter les variations instantanées du courant.

Un autre critère d'optimisation peut être la stabilité du réseau électrique du véhicule. Un fonctionnement plus stable permet de faciliter le fonctionnement des divers organes électriques du véhicule, et permet d'améliorer leur fiabilité. La stabilité du réseau électrique est caractérisée par les variations du courant et la tension dans les diverses branches du réseau de bord. Alternativement, on peut minimiser la taille des dispositifs de filtrage.

Selon encore une caractéristique de l'invention, le procédé comporte l'étape :

- Estimer un état de charge d'une unité de stockage de l'énergie électrique, l'unité de stockage étant connectée électriquement au réseau électrique, le réseau électrique étant alimenté par les deux générateurs électriques,
- Contrôler la puissance électrique produite par chaque générateur pour limiter les variations de l'état de charge de l'unité de stockage.

Le critère d'optimisation peut ainsi être la minimisation des variations de la charge de l'unité de stockage, notamment pour augmenter sa longévité.

Selon un mode de réalisation, l'unité de stockage de l'énergie électrique est une batterie électrochimique.

En variante ou de manière complémentaire, l'unité de stockage de l'énergie électrique comporte des ultra-capacités.

Selon une caractéristique de l'invention, le procédé comporte l'étape :

- Déterminer la faculté de production du générateur électrique entrainé mécaniquement par le moteur thermique à partir du régime de rotation du générateur électrique.

Le courant maximal que le générateur peut fournir dépend de son régime de rotation. A partir de cette information, il est donc possible de déterminer la faculté de production du générateur.

Selon un mode de réalisation, le régime de rotation du générateur électrique est déterminé à l'aide d'un capteur mesurant la vitesse de rotation d'un arbre de rotation du générateur électrique.

Le capteur est sensible au passage d'une cible magnétique et permet de déterminer le régime de rotation de l'arbre du générateur.

Selon un autre mode de réalisation, le régime de rotation du générateur électrique est déterminé à partir du signal délivré par un capteur mesurant la vitesse de rotation du moteur thermique.

Le rapport entre le régime de rotation du moteur thermique et le régime de rotation du générateur électrique étant fixe, le régime de rotation du générateur peut être déterminé à partir de la valeur du régime de rotation du moteur thermique. Cette donnée est calculée pour la gestion du moteur thermique.

Selon un autre mode de réalisation, le régime de rotation du générateur électrique est déterminé à partir de la vitesse mesurée du véhicule.

Lorsque le générateur électrique est entrainé par un organe lié en rotation avec une roue du véhicule, la connaissance de la vitesse du véhicule permet de déterminer le régime de rotation du générateur électrique.

Selon une caractéristique de l'invention, le procédé comporte l'étape :

- Déterminer la faculté de production du générateur électrique entrainé mécaniquement par le moteur thermique à partir d'une consigne de couple du moteur thermique.

La consigne de couple peut être la consigne imposée par le conducteur du véhicule. La prise en compte du couple moteur réclamé par le conducteur du véhicule, et produit par le moteur thermique entrainant le générateur électrique, permet d'améliorer l'estimation de la faculté de production du générateur électrique. En effet, plus le générateur va produire d'énergie électrique, plus son couple résistant exercé sur le moteur thermique sera élevé. Lorsque le couple produit par le moteur thermique est faible, il peut être nécessaire de limiter la production électrique du générateur afin de ne pas perturber le moteur thermique.

Selon un mode de réalisation, la consigne de couple du moteur thermique est estimée à partir d'une position d'une pédale d'accélérateur du véhicule et du régime de rotation du moteur thermique. Une possibilité pour estimer le couple moteur est d'utiliser la valeur du régime moteur et la valeur de l'enfoncement de la pédale d'accélérateur par le conducteur, qui reflète la valeur de la consigne de couple que le conducteur impose.

Selon une autre caractéristique de l'invention, la consigne de couple du moteur thermique est estimée à partir d'une position d'une pédale d'accélérateur du véhicule et d'une vitesse mesurée du véhicule.

Selon une caractéristique de l'invention, le procédé comporte l'étape :

- Déterminer la faculté de production du générateur électrique entrainé mécaniquement par le moteur thermique à partir d'un état de charge de l'unité de stockage de l'énergie électrique.

Lorsque l'unité de stockage de l'énergie électrique est complètement chargée, l'énergie électrique produite par le générateur électrique ne peut pas être stockée, et doit donc être utilisée immédiatement. Si la consommation électrique des organes électriques alors en fonctionnement est inférieure à la faculté de production du générateur, la production électrique du générateur devra être limitée. De la même manière, lorsque l'unité de stockage de l'énergie électrique est complètement déchargée, il n'est pas possible de produire davantage de couple à partir du moteur électrique.

Selon une autre caractéristique de l'invention, le procédé comporte l'étape :

- Déterminer la faculté de production du générateur électrique entrainé mécaniquement par le moteur thermique à partir d'une valeur de tension aux bornes de l'unité de stockage de l'énergie électrique.

Selon un mode de réalisation, l'état de charge de l'unité de stockage de l'énergie électrique est déterminé à partir du signal d'un capteur mesurant notamment le courant électrique traversant l'unité de stockage de l'énergie électrique et la tension électrique aux bornes de l'unité de stockage de l'énergie électrique.

L'état de charge de l'unité de stockage de l'énergie électrique est déterminé par un algorithme qui surveille le courant électrique reçu ou fourni par celle-ci, ainsi que la tension du réseau de bord du véhicule.

Selon une caractéristique de l'invention, le procédé comporte l'étape :

- Déterminer la faculté de production du générateur électrique entrainé mécaniquement par le moteur thermique à partir d'une température estimée du générateur.

Lorsque la machine électrique est chaude, il peut être nécessaire de limiter le courant fourni par le générateur, afin d'éviter une surchauffe des composants sensibles.

Selon une autre caractéristique de l'invention, le procédé comporte l'étape :

- Déterminer la faculté de production du générateur électrique entrainé mécaniquement par le moteur thermique à partir d'une température estimée de l'unité de stockage de l'énergie électrique.

De même, lorsque l'unité de stockage d'énergie électrique est une batterie électrochimique, et que sa température est très élevée, il peut être nécessaire de limiter la production électrique du générateur afin de minimiser les réactions chimiques susceptibles d'endommager la batterie. Lorsque l'unité de stockage d'énergie électrique comporte des ultra-capacités, il peut également être nécessaire de limiter la production électrique lorsque l'unité de stockage est à température élevée.

Selon une caractéristique de l'invention, le procédé comporte l'étape :

- Déterminer la faculté de production du générateur électrique entrainé par les gaz d'échappement du moteur thermique à partir du régime de rotation du générateur électrique.

La faculté de production du turbo-générateur est estimée à partir des mêmes grandeurs physiques que pour le générateur électrique entrainé mécaniquement par le moteur.

Selon un mode de réalisation, le régime de rotation du générateur électrique est déterminé par un capteur mesurant la vitesse de rotation d'un arbre de rotation du générateur électrique.

La détermination du régime du générateur électrique peut être assurée par un capteur mesurant le régime de rotation de l'arbre du générateur.

Selon une caractéristique de l'invention, le procédé comporte l'étape :

- Déterminer la faculté de production du générateur électrique entrainé par les gaz d'échappement du moteur thermique à partir de la pression des gaz d'échappement en amont de la turbine, de la pression des gaz d'échappement en aval de la turbine et du débit de gaz traversant la turbine.

Selon une caractéristique de l'invention, le débit de gaz traversant la turbine est une valeur de consigne, ou une valeur mesurée, ou une valeur estimée du débit de gaz d'échappement recirculés.

La connaissance du débit de gaz traversant la turbine, ainsi que de la pression de chaque coté de la turbine, permet de déterminer la puissance mécanique fournie par la turbine. La connaissance du régime de rotation du générateur électrique permet de plus de connaitre le rendement électrique du générateur, en combinant ces deux paramètres on peut ainsi déterminer la faculté de production du générateur électrique.

Selon un mode de réalisation, la pression en amont de la turbine est mesuré par un capteur de pression absolue.

La valeur de la pression servant à entrainer la turbine est ainsi connue avec précision à tout instant.

En variante ou de manière complémentaire, la pression en amont de la turbine est estimée à partir d'une valeur estimée du couple et du régime de rotation du moteur thermique.

Une estimation de la pression peut être réalisée à partir des informations du couple moteur produit et du régime de rotation du moteur thermique. Cette approche peut être utilisée pour éviter d'introduire un capteur supplémentaire, ou bien pour disposer d'une mesure de sauvegarde en cas de panne du capteur.

Selon un mode de réalisation, la pression en aval de la turbine est mesurée par un capteur de pression absolue.

Il est possible de mesurer la pression en aval de la turbine par un capteur de pression absolue.

En variante, la pression en aval de la turbine est déterminée à partir d'une mesure de la pression en amont de la turbine et d'une mesure de la pression différentielle entre l'amont et l'aval de la turbine. La pression absolue en amont de la turbine étant connue, et la pression différentielle l'étant également, la pression absolue en aval de la turbine peut être déterminée. L'implantation d'un capteur différentiel peut être plus facile que celle d'un capteur de pression absolue.

Selon une caractéristique de l'invention, le procédé comporte l'étape :

- Déterminer la faculté de production du générateur électrique entrainé par les gaz d'échappement du moteur thermique à partir de la température des gaz d'échappement en amont de la turbine.

L'énergie des gaz d'échappement est directement liée à leur température, la connaissance de la température des gaz permet donc de déterminer le potentiel de récupération d'énergie de la turbine.

La connaissance de la consigne de débit dans le circuit de recirculation permet d'estimer les valeurs de pression et de température des gaz d'échappement. Comme précédemment, cette approche peut être utilisée pour éviter l'ajout de capteurs ou pour minimiser les effets d'une défaillance d'un ou plusieurs capteurs.

Selon une autre caractéristique de l'invention, le procédé comporte l'étape :

- Déterminer la faculté de production du générateur électrique entrainé par les gaz d'échappement du moteur thermique partir d'un état de charge de l'unité de stockage de l'énergie électrique.

Comme précédemment, il peut être nécessaire de limiter la production d'électricité si l'unité de stockage n'est pas en mesure de stocker l'énergie produite.

Selon une autre caractéristique de l'invention, le procédé comporte l'étape :

- Déterminer la faculté de production du générateur électrique entrainé par les gaz d'échappement du moteur thermique à partir d'une température estimée du générateur électrique.

La encore, il peut être nécessaire de limiter la production d'électricité pour éviter une surchauffe des composants du générateur électrique.

Selon une autre caractéristique de l'invention, le procédé comporte l'étape :

- Déterminer la faculté de production du générateur électrique entrainé par les gaz d'échappement du moteur thermique à partir d'une température estimée de l'unité de stockage de l'énergie électrique.

Il peut être nécessaire de limiter la production d'électricité pour éviter un vieillissement accéléré de l'unité de stockage lorsque celle-ci est à une température proche des limites d'utilisation. L'invention concerne également un système de contrôle de production d'électricité sur un véhicule automobile, selon la revendication 9.

L'invention sera mieux comprise à la lecture des figures.

- La figure 1 représente de manière schématique un moteur à combustion équipé d'un système de contrôle de production d'électricité selon l'invention,
- La figure 2 est un schéma bloc illustrant les différentes étapes du procédé mis en oeuvre par le système de contrôle de la figure 1.

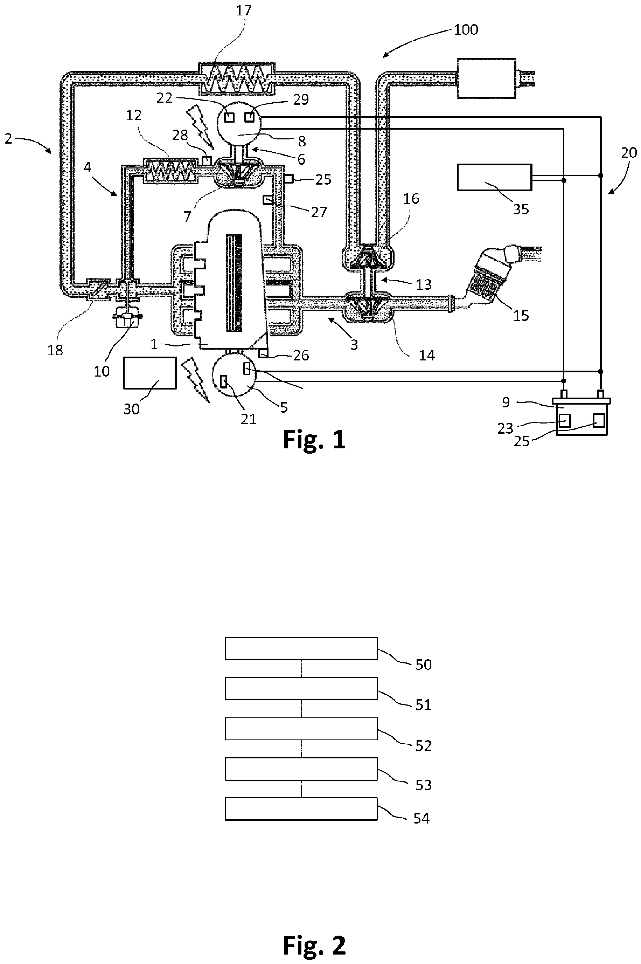

On a représenté sur la figure 1 un système de contrôle 100 de production d'électricité sur un véhicule automobile, le système comportant :

- Des premier et deuxième générateurs électriques 5,8 agencés pour produire de l'électricité à partir d'une énergie mécanique,
- une unité de contrôle 30 agencée pour :

  ◦ Estimer une faculté de production électrique associée au premier générateur,
  ◦ Estimer une faculté de production électrique associée au deuxième générateur,
  ◦ Contrôler la répartition de la puissance électrique produite par chaque générateur en fonction des facultés de production estimées,
  ◦ Contrôler la puissance électrique cumulée produite par les deux générateurs.

Deux générateurs électriques sont présents dans le système de la figure 1.

Le générateur électrique 5 est agencé pour être entrainé mécaniquement par le moteur thermique 1 du véhicule. Ce type de générateur électrique est généralement appelé alternateur. De manière classique, l'entrainement en rotation de l'arbre de l'alternateur dans un champ magnétique permet de générer du courant électrique.

Lorsque le générateur peut aussi fonctionner comme moteur électrique, afin d'apporter une assistance électrique au moteur thermique, on parlera d'alterno-démarreur.

Le générateur électrique 5 est agencé pour être entraîné par le moteur thermique 1 au moyen d'une courroie.

Le fonctionnement du moteur thermique est classique : l'air comburant est admis dans le circuit d'admission 2, qui comporte un compresseur de suralimentation 16 permettant d'augmenter la densité du mélange gazeux admis. Un échangeur de chaleur 17 permet de refroidir le mélange comburant avant son admission dans le moteur 1. Le boitier papillon 18 permet d'ajuster la quantité d'air comburant admise dans le moteur 1.

Le carburant est injecté dans les chambres de combustion du moteur par un système d'injection non représenté. Après combustion, les gaz d'échappement sont évacués par le circuit d'échappement 3. La majeure partie des gaz d'échappement traverse la turbine 14 du turbocompresseur 13 et l'entraine en rotation. L'énergie reçue par la turbine 14 permet d'assurer le travail de compression du compresseur 16, la turbine 14 et le compresseur 16 étant solidaires du même arbre de rotation. Après détente dans la turbine 14, les gaz d'échappement traversent un système de dépollution 15, permettant d'éliminer les polluants présents dans les gaz d'échappement, et sont évacués à l'extérieur.

Une partie des gaz d'échappement est recirculée vers le circuit d'admission 2 du moteur 1 via le circuit de recirculation 4. Le circuit de recirculation 4 comporte un échangeur de chaleur 12 et une vanne 10 permettant de régler le débit de gaz d'échappement recirculés dans le circuit 4. Le circuit de recirculation 4 des gaz d'échappement comporte une boucle dite « haute pression », c'est-à-dire que les gaz d'échappement sont recirculés entre une portion de circuit d'échappement du moteur située en amont de la turbine de suralimentation 14 du moteur thermique 1, et une portion de circuit d'admission du moteur thermique située en aval du compresseur de suralimentation 16.

Le générateur électrique 8 est agencé pour être entrainé par des gaz d'échappement du moteur thermique 1, notamment par l'intermédiaire d'une turbine 7 placée dans l'écoulement des gaz d'échappement et liée en rotation au générateur électrique 8.

Plus précisément, la turbine 7 entrainant le générateur électrique 8 est disposée dans le circuit de recirculation de gaz d'échappement 4, de manière à être entrainée par les gaz d'échappement circulant dans ce circuit de recirculation 4, les gaz d'échappement étant recirculés entre un circuit d'échappement 3 du moteur thermique 1 et un circuit d'admission en gaz comburant 2 du moteur thermique 1. L'ensemble comportant la turbine 7 et le générateur 8 est appelé turbogénérateur 6.

La turbine 7 est placée en amont de l'échangeur 12 et de la vanne de réglage du débit 10.

En plaçant la turbine 7 proche du moteur 1, selon une architecture de recirculation de gaz d'échappement « haute pression », on obtient ainsi le meilleur potentiel de récupération d'énergie, puisque les gaz d'échappement recirculés disposent du maximum d'énergie thermique et du maximum d'énergie de pression.

La production d'électricité par le générateur 5 entrainé mécaniquement par le moteur thermique 1 génère un couple résistant, susceptible d'augmenter la consommation de carburant du moteur thermique 1.

Par contre, la production d'électricité par le turbogénérateur 6 ne pénalise pas la consommation de carburant du moteur thermique 1. En effet, les conditions de pression de part et d'autre de la turbine 7 sont imposées par les conditions de fonctionnement du moteur. La turbine sur le circuit de recirculation permet de récupérer de l'énergie sans augmenter le travail de transfert des gaz. Autrement dit, la présence du turbogénérateur sur le circuit de recirculation de gaz d'échappement ne pénalise pas le fonctionnement du moteur thermique.

Les deux générateurs électriques 5 et 8 sont connectés au réseau électrique 20 du véhicule. Une unité de stockage d'énergie électrique 9 permet de stocker l'énergie électrique produite par les différents générateurs, et de la restituer à l'ensemble des consommateurs électriques 35, 5 présents sur le réseau électrique 20. L'unité de stockage 9 de l'énergie électrique est ici une batterie électrochimique.

On va maintenant décrire le procédé de contrôle.

La figure 2 décrit les différentes étapes du procédé de contrôle d'une production d'électricité sur un véhicule automobile, à partir d'un premier et d'un deuxième générateur électrique 5,8 agencés pour produire de l'électricité à partir d'une énergie mécanique, comportant les étapes :

- Estimer une faculté de production électrique associée au premier générateur (étape 51),
- Estimer une faculté de production électrique associée au deuxième générateur (étape 52),
- Contrôler la répartition de la puissance électrique produite par chaque générateur en fonction des facultés de production estimées (étape 53),
- Contrôler la puissance électrique cumulée produite par les deux générateurs (étape 54).

Le procédé permet ainsi de contrôler la production de chacun des deux générateurs électriques 5 et 8 afin d'optimiser la production totale d'électricité.

Selon une caractéristique de l'invention, la faculté de production électrique associée à chacun des générateurs est une puissance électrique que chacun des générateurs peut fournir.

Selon une autre caractéristique de l'invention, la faculté de production électrique associée à chacun des générateurs est une énergie électrique que chacun des générateurs peut fournir.

L'énergie électrique susceptible d'être produite au cours d'une phase de fonctionnement peut aussi être utilisée comme critère d'optimisation. L'énergie électrique est déterminée en intégrant la puissance électrique estimée sur une période temporelle déterminée.

En calculant la faculté de production électrique pour une phase de fonctionnement et non selon les conditions instantanées de fonctionnement, l'estimation de la production électrique peut être plus précise.

Ces deux modes de détermination de la faculté de production électrique associée à chacun des générateurs peuvent être utilisés sélectivement suivant les cas de fonctionnement du véhicule rencontrés.

Plusieurs critères d'optimisation peuvent être utilisés.

Un premier critère d'optimisation peut être de minimiser la consommation de carburant du véhicule. Ainsi, le procédé comporte l'étape :

- Estimer une consommation de carburant du moteur thermique 1 (étape 50),
- Contrôler la puissance électrique produite par chaque générateur 5,8 pour minimiser la consommation de carburant.

L'énergie électrique récupérée permet de limiter la demande énergétique imposée au moteur à combustion et ainsi diminuer la consommation de carburant. Typiquement, le procédé vise à réduire l'énergie que le moteur thermique doit fournir, en privilégiant alors l'assistance électrique procurée par le générateur 5.

La méthode d'optimisation utilisée est basée sur le principe du minimum de Pontryagin. Les variables prises en compte sont la consommation instantanée du moteur et l'état de charge de l'unité de stockage d'énergie. Cette méthode d'utilisation n'est qu'un exemple, d'autres méthodes de recherche d'optimum pouvant être appliquées.

Un autre critère d'optimisation utilisé est de minimiser les émissions de gaz polluants du moteur thermique 1.

Pour cette raison, le procédé comporte l'étape :

- Estimer les émissions de gaz polluants du moteur thermique 1,
- Contrôler la puissance électrique produite par chaque générateur 5,8 pour minimiser les émissions de gaz polluants.

Le procédé vise alors à optimiser les phases de fonctionnement émettant le plus de polluants, par exemple lorsque le système de dépollution du moteur thermique n'est pas encore efficace car à une température insuffisante.

Un autre critère d'optimisation est la stabilité du réseau électrique 20 du véhicule.

Pour y parvenir, le procédé comporte l'étape :

- Estimer les variations instantanées du courant circulant dans un réseau électrique 20 du véhicule, le réseau électrique 20 étant alimenté par les deux générateurs électriques 5,8,
- Contrôler la puissance électrique produite par chaque générateur 5,8 pour minimiser les variations instantanées du courant.

Un fonctionnement plus stable permet de faciliter le fonctionnement des divers organes électriques du véhicule, et permet d'améliorer leur fiabilité. Alternativement, on peut minimiser la taille des dispositifs de filtrage du réseau électrique 20.

Un autre critère d'optimisation peut être la minimisation des variations de la charge de la batterie 9. Le procédé comporte ainsi l'étape :

- Estimer un état de charge d'une batterie de stockage 9 de l'énergie électrique, la batterie 9 étant connectée électriquement au réseau électrique 20, le réseau électrique 20 étant alimenté par les deux générateurs électriques 5,8,
- Contrôler la puissance électrique produite par chaque générateur 5,8 pour minimiser les variations de l'état de charge de la batterie 9.

En effet, en limitant la profondeur de décharge de la batterie on peut améliorer sa durée de vie.

La faculté de production électrique de chacun des générateurs est estimée à partir de la valeur des paramètres physiques conditionnant son fonctionnement.

Selon une caractéristique de l'invention, le procédé comporte l'étape :

- Déterminer la faculté de production du générateur électrique 5 entraîné mécaniquement par le moteur thermique 1 à partir du régime de rotation du générateur électrique 5.

Le courant maximal que le générateur peut fournir dépend de son régime de rotation. C'est une caractéristique du générateur, pour une conception donnée. La connaissance du régime de rotation du générateur permet ainsi de déterminer l'intensité maximale du courant qu'il est possible de délivrer.

Selon l'exemple représenté, le régime de rotation du générateur électrique 5 est déterminé à l'aide d'un capteur 21 mesurant la vitesse de rotation d'un arbre de rotation du générateur électrique 5.

Afin d'affiner l'estimation, d'autres critères sont pris en compte pour estimer la faculté de production du générateur électrique 5. Pour cela, le procédé comporte l'étape :

- Déterminer la faculté de production du générateur électrique 5 entraîné mécaniquement par le moteur thermique 1 à partir d'une consigne de couple du moteur thermique 1.

La prise en compte du couple produit par le moteur thermique entraînant le générateur électrique permet d'améliorer l'estimation de la faculté de production du générateur électrique.

Selon un mode de réalisation, la consigne de couple du moteur thermique 1 est estimée à partir d'une position d'une pédale d'accélérateur du véhicule et du régime de rotation du moteur thermique 1.

La valeur de l'enfoncement de la pédale d'accélérateur par le conducteur reflète la valeur de la consigne de couple que le conducteur impose. La prise en compte du régime de rotation du moteur thermique permet d'affiner l'estimation.

Toujours pour affiner la prévision, le procédé comporte l'étape :

- Déterminer la faculté de production du générateur électrique 5 entraîné mécaniquement par le moteur thermique 1 à partir d'un état de charge de la batterie de stockage 9 de l'énergie électrique.

En effet, lorsqu'elle est proche de sa charge maximale, la batterie ne peut généralement pas stocker toute l'énergie électrique susceptible d'être produite par le générateur. La puissance électrique fournie par le générateur doit alors être limitée à la capacité de stockage encore disponible.

Sur l'exemple de la figure 1, l'état de charge de la batterie 9 est déterminé à partir du signal d'un capteur 23 mesurant notamment le courant électrique traversant la batterie 9 et la tension électrique aux bornes de la batterie 9.

L'état de charge de la batterie est déterminé par un algorithme qui surveille le courant électrique reçu ou fourni par la batterie, ainsi que la tension du réseau de bord du véhicule.

Les caractéristiques électriques du générateur 5 dépendent de la température interne de ses composants. Pour prendre en compte ce phénomène, le procédé comporte l'étape :

- Déterminer la faculté de production du générateur électrique 5 entraîné mécaniquement par le moteur thermique 1 à partir d'une température estimée du générateur 5.

Lorsque la machine électrique est chaude, le courant fourni par le générateur peut être limité afin d'éviter une surchauffe des composants sensibles. La température du générateur 5 est mesurée par un capteur de température 29.

De même, la capacité de stockage de la batterie 9 dépend de sa température interne.

Pour prendre en compte ce phénomène le procédé comporte l'étape :

- Déterminer la faculté de production du générateur électrique 5 entrainé mécaniquement par le moteur thermique 1 à partir d'une température estimée de la batterie de stockage de l'énergie électrique.

De même, lorsque la batterie est très chaude, il peut être nécessaire de limiter la production électrique du générateur afin de minimiser les réactions chimiques susceptibles d'endommager la batterie. La température de la batterie est mesurée par un capteur 25. En variante, la température de la batterie peut être estimée à partir de la valeur de la température d'un composant voisin, dont la température est déterminée par ailleurs.

Le procédé de détermination de la faculté de production électrique du turbogénérateur 6 va maintenant être décrit.

Selon une première caractéristique, le procédé comporte l'étape :

- Déterminer la faculté de production du générateur électrique 8 entrainé par les gaz d'échappement du moteur thermique à partir du régime de rotation du générateur électrique 8.

Le régime de rotation du générateur électrique 8 est déterminé par un capteur 22 mesurant la vitesse de rotation d'un arbre de rotation du générateur électrique 8.

Selon une autre caractéristique, le procédé comporte l'étape :

- Déterminer la faculté de production du générateur électrique 8 entrainé par les gaz d'échappement du moteur thermique 1 à partir de la pression des gaz d'échappement en amont de la turbine, de la pression des gaz d'échappement en aval de la turbine 7 et du débit de gaz traversant la turbine 7.

La connaissance de la pression des gaz de chaque coté de la turbine 7, et de la valeur du débit traversant la turbine, permet de déterminer la puissance mécanique que la turbine 7 peut fournir. On peut par exemple calculer la puissance P fournie par la turbine (en kW) par la relation suivante :

$$P = \dot{m} \times C_P \times T_{in} \times \left[1 - \left(\frac{1}{R_P}\right)^{\frac{\gamma-1}{\gamma}}\right] \times R$$

avec $\dot{m}$ le débit de la turbine (kg/s) ; $C_P$ la capacité calorifique à pression constante des gaz d'échappement (J.K$^{-1}$/kg) ; $T_{in}$ la température des gaz à l'entrée de la turbine (K) ; RP le rapport entre la pression à l'entrée et la pression à la sortie de la turbine ; y le rapport entre la capacité calorifique à pression constante et la capacité calorifique à volume constant, et R le rendement de la turbine.

La connaissance du courant produit par le générateur électrique et de son régime de rotation permet de plus de connaitre le rendement électrique du générateur 8. Ce rendement peut être corrigé en fonction de la température du générateur.

En multipliant la puissance mécanique fournie par la turbine par le rendement électrique du générateur, on obtient la faculté de production du générateur électrique.

Le débit de gaz traversant la turbine est une valeur de consigne du débit de gaz d'échappement recirculés. Selon un autre mode de réalisation, le débit de gaz traversant la turbine est une valeur mesurée. Selon encore un autre mode de réalisation, le débit de gaz traversant la turbine est une valeur estimée du débit de gaz d'échappement recirculés. L'estimation peut par exemple être faite en mesurant séparément le débit d'air frais consommé par le moteur thermique et le débit total de gaz admis, puis en soustrayant ces deux valeurs.

Sur l'exemple de la figure 1, la pression en amont de la turbine 7 est mesurée par un capteur de pression absolue 25.

En variante ou de manière complémentaire, la pression en amont de la turbine 7 est estimée à partir d'une valeur estimée du couple et du régime de rotation du moteur thermique 1.

Une estimation de la pression peut être réalisée à partir des informations du couple moteur produit et du régime de rotation du moteur thermique 1. Cette approche peut être utilisée pour disposer d'une mesure de sauvegarde en cas de panne du capteur 25, la valeur alors obtenue étant substituée à la valeur mesurée par le capteur 25.

De la même manière, la pression en aval de la turbine 7 est mesurée par un capteur de pression absolue 28.

La température des gaz d'échappement traversant la turbine influence également son fonctionnement. Pour prendre en compte ce facteur, le procédé comporte l'étape :

- Déterminer la faculté de production du générateur électrique 8 entrainé par les gaz d'échappement du moteur thermique 1 à partir de la température des gaz d'échappement en amont de la turbine.

La température des gaz en amont de la turbine 7 est mesurée par le capteur de température 27.

Comme vu précédemment, il peut être nécessaire de limiter la production d'électricité si la batterie 9 n'est pas en mesure de stocker toute l'énergie électrique produite.

Pour cela, le procédé comporte l'étape :

- Déterminer la faculté de production du générateur électrique 8 entrainé par les gaz d'échappement du moteur thermique 1 à partir d'un état de charge de la batterie de stockage 9 de l'énergie électrique.

Comme vu précédemment, il peut être nécessaire de limiter la production d'électricité pour éviter une surchauffe des composants du générateur électrique 8.

A cette fin, le procédé comporte l'étape :

- Déterminer la faculté de production du générateur électrique 8 entrainé par les gaz d'échappement du moteur thermique 1 à partir d'une température estimée ou mesurée du générateur électrique 8.

Enfin, afin de limiter la production d'électricité pour éviter un vieillissement accéléré de la batterie 9 lorsque celle-ci est à une température proche des limites d'utilisation, le procédé comporte l'étape :

- Déterminer la faculté de production du générateur électrique 8 entrainé par les gaz d'échappement du moteur thermique 1 à partir d'une température estimée de la batterie de stockage 9 de l'énergie électrique.

Selon des modes de réalisation non représentés, le procédé décrit peut également comprendre une ou plusieurs des caractéristiques ci-dessous, considérées individuellement ou combinées entre elles :

- Le générateur électrique 5 est en prise directe avec le moteur thermique 1. La liaison mécanique entre moteur thermique et machine électrique peut être par engrènement de pignon.

- Le générateur électrique 5 est agencé pour être entrainé mécaniquement par une roue du véhicule.

- L'unité de stockage 9 de l'énergie électrique comporte des ultra-capacités.

- Le régime de rotation du générateur électrique 5 est déterminé à partir du signal délivré par un capteur 26 mesurant la vitesse de rotation du moteur thermique. Le rapport entre le régime de rotation du moteur thermique et le régime de rotation du générateur électrique étant fixe, on obtient facilement le régime de rotation du générateur électrique à partir du régime de rotation du moteur thermique.

- Le régime de rotation du générateur électrique 5 est déterminé à partir de la vitesse mesurée du véhicule. Lorsque le générateur électrique est entrainé par un organe lié en rotation avec une roue du véhicule, la connaissance de la vitesse du véhicule permet de déterminer le régime de rotation du générateur électrique.

- La consigne de couple du moteur thermique est estimée à partir d'une position d'une pédale d'accélérateur du véhicule et d'une vitesse mesurée du véhicule.

- Selon une autre caractéristique de l'invention, le procédé comporte l'étape :
Déterminer la faculté de production du générateur électrique 5 entrainé mécaniquement par le moteur thermique 1 à partir d'une valeur de tension aux bornes de l'unité de stockage 9 de l'énergie électrique.

- La pression en aval de la turbine 7 est déterminée à partir d'une mesure de la pression en amont de la turbine 7 et d'une mesure de la pression différentielle entre l'amont et l'aval de la turbine.

- La faculté de production du générateur électrique 8 entrainé par les gaz d'échappement du moteur thermique 1 est déterminée à partir d'une valeur de consigne du débit de gaz d'échappement recirculés. La connaissance de la consigne de débit dans le circuit de recirculation permet d'estimer la puissance récupérable par la turbine.

## Revendications

1. Procédé de contrôle d'une production d'électricité sur un véhicule automobile, à partir d'un premier et d'un deuxième générateur électrique (5,8), agencés pour produire de l'électricité à partir d'une énergie mécanique,
l'un des générateurs électriques (5) est agencé pour être entrainé mécaniquement par un moteur thermique (1) du véhicule,
l'un des générateurs électriques (8) est agencé pour être entrainé par des gaz d'échappement du moteur thermique (1), notamment par l'intermédiaire d'une turbine (7) placée dans l'écoulement des gaz d'échappement et liée en rotation au générateur électrique (8),
la turbine (7) entrainant le générateur électrique (8) est disposée dans un circuit de recirculation de gaz d'échappement (4), de manière à être entrainée par les gaz d'échappement circulant dans ce circuit de recirculation (4), les gaz d'échappement étant recirculés entre un circuit d'échappement (3) du moteur thermique (1) et un circuit d'admission en gaz comburant (3) du moteur thermique (1),
le procédé comportant les étapes :

- Estimer une faculté de production électrique associée au premier générateur (étape 51),
- Estimer une faculté de production électrique associée au deuxième générateur (étape 52),
- Contrôler la répartition de la puissance électrique produite par chaque générateur en fonction des facultés de production estimées (étape 53),
- Contrôler la puissance électrique cumulée produite par les deux générateurs (étape 54).

2. Procédé selon la revendication 1, selon lequel la faculté de production électrique associée à chacun des générateurs (5,8) est une puissance électrique que chacun des générateurs (5,8) peut fournir.

3. Procédé selon l'une des revendications 1 et 2, comportant l'étape :

- Estimer une consommation de carburant du moteur thermique (1),
- Contrôler la puissance électrique produite par chaque générateur (5,8) pour minimiser la consommation de carburant.

4. Procédé selon l'une des revendications précédentes, comportant l'étape :

- Estimer un état de charge d'une unité de stockage (9) de l'énergie électrique, l'unité (9) étant connectée électriquement à un réseau électrique (20), le réseau électrique (20) étant alimenté par les deux générateurs électriques (5,8),
- Contrôler la puissance électrique produite par chaque générateur (5,8) pour limiter les variations de l'état de charge de l'unité de stockage(9).

5. Procédé selon l'une des revendications précédentes, comportant l'étape :

- Déterminer la faculté de production du générateur électrique (5) entrainé mécaniquement par le moteur thermique (1) à partir du régime de rotation du générateur électrique (5).

6. Procédé selon l'une des revendications 4 et 5, comportant l'étape :

- Déterminer la faculté de production du générateur électrique (5) entrainé mécaniquement par le moteur thermique (1) à partir d'un état de charge de l'unité de stockage (9) de l'énergie électrique.

7. Procédé selon l'une des revendications précédentes, comportant l'étape :

- Déterminer la faculté de production du générateur électrique (8) entrainé par les gaz d'échappement du moteur thermique (1) à partir du régime de rotation du générateur électrique (8).

8. Procédé selon l'une des revendications précédentes, comportant l'étape :

- Déterminer la faculté de production du générateur électrique (8) entrainé par les gaz d'échappement du moteur thermique (1) à partir de la pression des gaz d'échappement en amont de la turbine (7), de la pression des gaz d'échappement en aval de la turbine (7) et du débit de gaz traversant la turbine (7).

9. Système de contrôle (100) de production d'électricité sur un véhicule automobile, le système comportant :

Des premier et deuxième générateurs électriques (5,8), agencés pour produire de l'électricité à partir d'une énergie mécanique, l'un des générateurs électriques (5) est agencé pour être entrainé mécaniquement par un moteur thermique (1) du véhicule,
l'un des générateurs électriques (8) est agencé pour être entrainé par des gaz d'échappement du moteur thermique (1), notamment par l'intermédiaire d'une turbine (7) placée dans l'écoulement des gaz d'échappement et liée en rotation au générateur électrique (8),
la turbine (7) entrainant le générateur électrique (8) est disposée dans un circuit de recirculation de gaz d'échappement (4), de manière à être entrainée par les gaz d'échappement circulant dans ce circuit de recirculation (4), les gaz d'échappement étant recirculés entre un circuit d'échappement (3) du moteur thermique (1) et un circuit d'admission en gaz comburant (3) du moteur thermique (1).

- une unité de contrôle (30) agencée pour :

∘ Estimer une faculté de production électrique associée au premier générateur,
∘ Estimer une faculté de production électrique associée au deuxième générateur,
∘ Contrôler la répartition de la puissance électrique produite par chaque générateur en fonction des facultés de production estimées,
∘ Contrôler la puissance électrique cumulée produite par les deux générateurs.

**Patentansprüche**

1. Verfahren zur Kontrolle einer Stromerzeugung in einem Kraftfahrzeug ausgehend von einem ersten und einem zweiten elektrischen Generator (5, 8), die ausgebildet sind, um Strom ausgehend von einer mechanischen Energie zu erzeugen,
einer der elektrischen Generatoren (5) ist ausgebildet, um von einem Verbrennungsmotor (1) des Fahrzeugs mechanisch angetrieben zu werden,
einer der elektrischen Generatoren (8) ist ausgebildet, um von Abgasen des Verbrennungsmotors (1) des Fahrzeugs angetrieben zu werden, insbesondere durch eine Turbine (7), die in der Abgasströmung angeordnet ist und mit dem elektrischen Generator (8) drehbar verbunden ist,
die Turbine (7), die den elektrischen Generator (8) antreibt, ist in einem Abgasrückführungskreis (4) derart angeordnet, um von den Abgasen angetrieben zu werden, die in diesem Rückführungskreis (4) zirkulieren, wobei die Abgase zwischen einem Abgaskreis (3) des Verbrennungsmotors (1) und einem Einlasskreis des Oxidationsgases (3) des Verbrennungsmotors (1) rückgeführt werden,
wobei das Verfahren die Schritte aufweist:

- Schätzen einer Stromerzeugungsfähigkeit, die mit dem ersten Generator (Schritt 51) verbunden ist,
- Schätzen einer Stromerzeugungsfähigkeit, die mit dem zweiten Generator (Schritt 52) verbunden ist,
- Kontrollieren der Verteilung der elektrischen Leistung, die von jedem Generator erzeugt wird, in Abhängigkeit von den geschätzten Stromerzeugungsfähigkeiten (Schritt 53),
- Kontrollieren der kumulierten elektrischen Leistung, die von den zwei Generatoren erzeugt wird (Schritt 54).

2. Verfahren nach Anspruch 1, wobei die Stromerzeugungsfähigkeit, die mit jedem der Generatoren (5, 8) verbunden ist, eine elektrische Leistung ist, die jeder der Generatoren (5, 8) bereitstellen kann.

3. Verfahren nach einem der Ansprüche 1 und 2, umfassend den Schritt:

- Schätzen eines Kraftstoffverbrauchs des Verbrennungsmotors (1),
- Kontrollieren der elektrischen Leistung, die von jedem Generator (5, 8) erzeugt wird, um den Kraftstoffverbrauch zu minimieren.

4. Verfahren nach einem der vorhergehenden Ansprüche, umfassend den Schritt:

- Schätzen eines Ladezustands einer Speichereinheit (9) der elektrischen Energie, wobei die Speichereinheit (9) an ein elektrisches Netz (20) elektrisch angeschlossen ist, wobei das elektrische Netz (20) durch die zwei elektrischen Generatoren (5, 8) versorgt wird,
- Steuern der elektrischen Leistung, die von jedem Generator (5, 8) erzeugt wird, um die Veränderungen des Ladezustands der Speichereinheit (9) zu begrenzen.

5. Verfahren nach einem der vorhergehenden Ansprüche, umfassend den Schritt:

- Bestimmen der Stromerzeugungsfähigkeit des elektrischen Generators (5), der von dem Verbrennungsmotor (1) mechanisch angetrieben wird, ausgehend von der Drehzahl des elektrischen Generators (5).

6. Verfahren nach einem der Ansprüche 4 und 5, umfassend den Schritt:

- Bestimmen der Stromerzeugungsfähigkeit des elektrischen Generators (5), der von dem Verbrennungsmotor (1) mechanisch angetrieben wird, ausgehend von einem Ladezustand der Speichereinheit (9) der elektrischen Energie.

7. Verfahren nach einem der vorhergehenden Ansprüche, umfassend den Schritt:

- Bestimmen der Stromerzeugungsfähigkeit des elektrischen Generators (8), der von den Abgasen des Verbrennungsmotors (1) angetrieben wird, ausgehend von der Drehzahl des elektrischen Generators (8).

8. Verfahren nach einem der vorhergehenden Ansprüche, umfassend den Schritt:

- Bestimmen der Stromerzeugungsfähigkeit des elektrischen Generators (8), der von den Abgasen des Verbrennungsmotors (1) angetrieben wird, ausgehend von dem Druck der Abgase vorgelagert vor der Turbine (7), dem Druck der Abgase nachgelagert nach der Turbine (7) und dem Gasstrom, der durch die Turbine (7) strömt.

9. System zur Kontrolle (100) der Stromerzeugung in einem Kraftfahrzeug, wobei das System aufweist:

einen ersten und einen zweiten elektrischen Generator (5, 8), die ausgebildet sind, um Strom ausgehend von einer mechanischen Energie zu erzeugen, einer der elektrischen Generatoren (5) ist ausgebildet, um von einem Verbrennungsmotor (1) des Fahrzeugs mechanisch angetrieben zu werden,
einer der elektrischen Generatoren (8) ist ausgebildet, um von Abgasen des Verbrennungsmotors (1) des Fahrzeugs angetrieben zu werden, insbesondere durch eine Turbine (7), die in der Abgasströmung angeordnet ist und mit dem elektrischen Generator (8) drehbar verbunden ist,
die Turbine (7), die den elektrischen Generator (8) antreibt, ist in einem Abgasrückführungskreis (4) derart angeordnet, um von den Abgasen angetrieben zu werden, die in diesem Rückführungskreis (4) zirkulieren, wobei die Abgase zwischen einem Abgaskreis (3) des Verbrennungsmotors (1) und einem Einlasskreis des Oxidationsgases (3) des Verbrennungsmotors (1) rückgeführt werden,

- eine Steuereinheit (30), die ausgebildet ist, um:

∘ die Stromerzeugungsfähigkeit, die mit dem ersten Generator verbunden ist, zu schätzen,
∘ die Stromerzeugungsfähigkeit, die mit dem zweiten Generator verbunden ist, zu schätzen,
∘ die Verteilung der elektrischen Leistung, die von jedem Generator erzeugt wird, in Abhängigkeit von den geschätzten Stromerzeugungsfähigkeiten zu kontrollieren,
∘ die kumulierte elektrische Leistung, die von den zwei Generatoren erzeugt wird, zu kontrollieren.

**Claims**

1. Method for controlling electricity production on a motor vehicle, from a first and a second electrical generator (5, 8) that are arranged to produce electricity from a mechanical energy,
one of the electrical generators (5) is arranged to be driven mechanically by a heat engine (1) of the vehicle,
one of the electrical generators (8) is arranged to be driven by exhaust gases from the heat engine (1), in particular via a turbine (7) placed in the flow of the exhaust gases and linked in rotation to the electrical generator (8),
the turbine (7) driving the electrical generator (8) is arranged in an exhaust gas recirculation circuit (4), so as to be driven by the exhaust gases circulating in this recirculation circuit (4), the exhaust gases being recirculated between an exhaust circuit (3) of the heat engine (1), and an oxidizing gas intake circuit (3) of the heat engine (1),
the method comprising the steps of:

- estimating an electrical production capacity associated with the first generator (step 51),
- estimating an electrical production capacity associated with the second generator (step 52),
- controlling the distribution of the electrical power produced by each generator as a function of the estimated production capacities (step 53),
- controlling the aggregate electrical power produced by the two generators (step 54).

2. Method according to Claim 1, according to which the electrical production capacity associated with each of the generators (5, 8) is an electrical power that each of the generators (5, 8) can provide.

3. Method according to one of Claims 1 and 2, comprising the step of:

- estimating a fuel consumption of the heat engine (1),
- controlling the electrical power produced by each generator (5, 8) to minimize the fuel consumption.

4. Method according to one of the preceding claims, comprising the step of:

- estimating a state of charge of a storage unit (9) of the electrical energy, the unit (9) being connected electrically to an electrical network (20), the electrical network (20) being powered by the two electrical generators (5, 8),
- controlling the electrical power produced by each generator (5, 8) to limit the variations of the state of charge of the storage unit (9).

5. Method according to one of the preceding claims, comprising the step of:

- determining the production capacity of the electrical generator (5) driven mechanically by the heat engine (1) from the speed of rotation of the electrical generator (5).

6. Method according to one of Claims 4 and 5, comprising the step of:

- determining the production capacity of the electrical generator (5) driven mechanically by the heat engine (1) from a state of charge of the storage unit (9) of the electrical energy.

7. Method according to one of the preceding claims, comprising the step of:

- determining the production capacity of the electrical generator (8) driven by the exhaust gases from the heat engine (1) from the speed of rotation of the electrical generator (8).

8. Method according to one of the preceding claims, comprising the step of:

- determining the production capacity of the electrical generator (8) driven by the exhaust gases from the heat engine (1) from the pressure of the exhaust gases upstream of the turbine (7), from the pressure of the exhaust gases downstream of the turbine (7) and from the flow rate of the gases passing through the turbine (7).

9. System (100) for controlling electricity production on a motor vehicle, the system comprising:

first and second electrical generators (5, 8) that are arranged to produce electricity from a mechanical energy, one of the electrical generators (5) is arranged to be driven mechanically by a heat engine (1) of the vehicle,
one of the electrical generators (8) is arranged to be driven by exhaust gases from the heat engine (1), in particular via a turbine (7) placed in the flow of the exhaust gases and linked in rotation to the electrical generator (8),
the turbine (7) driving the electrical generator (8) is arranged in an exhaust gas recirculation circuit (4), so as to be driven by the exhaust gases circulating in this recirculation circuit (4), the exhaust gases being recirculated between an exhaust circuit (3) of the heat engine (1), and an oxidizing gas intake circuit (3) of the heat engine (1),

- a control unit (30) arranged to:

◦ estimate an electrical production capacity associated with the first generator,
◦ estimate an electrical production capacity associated with the second generator,
◦ control the distribution of the electrical power produced by each generator as a function of the estimated production capacities,
◦ control the aggregate electrical power produced by the two generators.

**Fig. 1**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2379867 A
- FR 3022946